# EUROPEAN PATENT SPECIFICATION

(11) **EP 4 394 189 B1**
(45) Date of publication and mention of the grant of the patent: **20.08.2025**
(21) Application number: 23220508.8
(22) Date of filing: 28.12.2023
(51) Int. Cl.: F16B 5/02, F16B 35/04

(54) **THREADED FASTENING ARRANGEMENT**
SCHRAUBVERBINDUNGSANORDNUNG
DISPOSITIF DE FIXATION FILETÉ

(30) Priority: 29.12.2022 NL 2033871
(43) Date of publication of application: 03.07.2024
(73) Proprietor: DAF Trucks N.V., 5643 TW Eindhoven (NL)
(72) Inventor: SEGERS, Frank Henri, 5643 TW Eindhoven (NL); VAN KNIPPENBERG, Ronald Antonius Johannes, 5643 TW Eindhoven (NL)
(74) Representative: V.O.

(56) References cited:
- EP-A1- 3 787 137
- EP-A2- 1 195 534
- WO-A1-2018/098024
- WO-A2-2005/052386
- US-A- 2 163 446
- US-A1- 2018 023 608
- US-B1- 6 196 356

## Description

The invention relates to a threaded fastening arrangement for mounting a component to a base component comprising a pair of cooperating fastening parts and a component according to independent claim 1 and a method of mounting a component according to independent claim 10.

Components can be mounted to each other using threaded means such as bolts and nuts. In a conventional context, a fastening part has a flanged contact surface in contact with the component, that has a hole for accommodating the bolt. Also conventionally, the pair of threaded fastening parts are rotated relative to each other, to provide for a clamping arrangement through the threads.

In certain applications, it is preferred that the releasable connection cannot be released by accident. For example, when components are connected via a bolt and nut heavy vibration may release the connection. In order to mitigate this effect, a glue or friction conditioner may be applied to the bolt and / or nut. The glue or friction conditioner may increase the friction applied by the nut on the bolt and vice versa, thereby making it unlikely that the bolt and nut are released. In case the bolt and nut need to be released on purpose, e.g. maintenance or replacement of components, the glue or friction conditioner may be removed by applying heat or a solvent. Afterwards, a new friction conditioner or glue may be applied again when the bolt and nut are used to form a releasable connection once more.

A disadvantage of using glue or a friction conditioner is that it may make forming the releasable connection more difficult to which end a slotted hole may provide the proper counter torque during the assembly. In such context, it is undesired that one of the fastening part rotates during assembly, and a slotted hole in the component may accommodate an abutment surface that extends from the flanged contact surface and that prevents rotation of the first fastening part. However the slotted hole

requires a relative orientation of the abutment surface of the fastening part to accommodate the fastening part correctly. In practice, there may be situations that it is not easy to accommodate the fastening part, in particular, if more than one fastening parts are used and manual positioning of the fastening part is problematic or even impossible.

Publication EP 3 787 137 A1 discloses a connecting device which is provided for connecting two elements of a cable tray, such as a ceiling support or a first and second cable tray section adjacent to one another. The connecting device comprises at least one connecting set having at least one connecting screw and a corresponding screw nut. At least one of the cable tray elements has an elongate passage opening. Publication US 6 196 356 B1 discloses a method and apparatus for installing an elevator car and counterweight guide rails within an elevator hoistway of a building that requires no welding operations to be performed in order to connect the brackets. Specially configured connector bolts are provided which impart substantial structural integrity to the interconnected bracket. WO 2018/098024 discloses a system including panels and a fastener for fastening the panels together. A distal portion of a threaded shaft and have has a distal portion which has a perimeter surface permitting rotation of the fastener within a non-circular opening when the distal surface extends into the non-circular opening.

The invention aims to counteract the above disadvantages, by providing for a threaded fastening arrangement, preferably with a high friction thread that easily can be releasably connected.

To this end, the invention relates to a threaded fastening arrangement for mounting a component to a base component, comprising a pair of cooperating fastening parts and a component. The component comprises a slotted hole defined by a slotted hole surface and wherein a first fastening part of the pair of cooperating fastening parts comprises an abutment surface arranged to substantially limit rotation of the first fastening part relative to the component when the abutment surface abuts the slotted hole surface. The slotted hole or the first fastening part comprises a guiding surface contiguous to the abutment surface and shaped to rotate the first fastening part relative to the slotted hole such that the abutment surface abuts the slotted hole surface thereby causing the first fastening part to become rotationally locked with the component.
The threaded fastening arrangement has the advantage that the fastening parts need not be separately rotated to bring the fastening part in position in the slotted hole, which offers efficiency and safety benefits when assembling the fastening parts for mounting a component to a base component

A threaded fastening arrangement can provide for a releasable connection between components. Having a releasable connection allows for the connection to be undone without damaging the components, for example when maintenance needs to be performed or components need to be repaired. In the invention, at least one of the components that needs to be repaired. In the invention, at least one of the components that needs to be mounted to a base component, or second component, has a slotted hole, i.e. an elongated opening. The slotted hole is preferably a straight slotted hole, i.e. its longitudinal direction is substantially not curved. A first part of the fastening part of the pair of cooperating fastening parts comprises an abutment surface that can abut with a slotted hole surface. For example, the abutment surface may be a substantially planar surface provided on the first fastening means. Such a planar, or flat, surface may interface substantially with most, or all, of its surface with the surface of the slotted hole. The first fastening part is dimensioned such that, once provided in the slotted hole and the abutment surface abuts the surface of the slotted hole, slack between the first fastening part and the slotted hole surface is relatively small. In other words, the first fastening part is dimensioned such that if the abutment surface does not abut the surface of the slotted hole, the first fastening part cannot be provided in the slotted hole.

In order to help facilitate the correct orientation of the first fastening part relative to the slotted hole, i.e. such that the abutting surface can abut the surface of the slotted hole, a guiding surface is provided. Preferably, the guiding surface is arranged to provide for a rotational movement of the first fastening part when the first fastening part is provided in the slotted hole. For example, a person assembling the component to a base component can provide the first fastening part in the slotted hole of the component. When the first fastening part is not correctly orientated, and the abutment surface does not abut the surface of the slotted hole, an axial force can be provided on the first fastening part in the direction of the component. The guiding surface will come in to contact with the component, and due to the force applied on the first fastening part, will cause the first fastening part to rotate around an axis. When the guiding surface is obliquely orientated relative to the rotation axis of the first fastening part, rotation of the first fastening part allows for the first fastening part to move further in to the slotted hole. Once the first fastening means is correctly orientated relative to the slotted hole, i.e. the abutting surface is aligned with the surface of the slotted hole, the first fastening part can move to its final position in the slotted hole, wherein the abutting surface abuts the surface of the slotted hole.

Once the first fastening part is provided in the slotted hole such that the abutting surface abuts the surface of the slotted hole, the abutting of the surfaces causes the first fastening part to be rotationally locked with the component. In other words, the first fastening part can no longer rotate relative to the component. As a result, it is now possible to rotate the second fastening part relative to the first fastening part, for example by using an impact wrench, without the first fastening part rotation locking with the second fastening part such that both fastening parts rotate relative to the component and thus not forming a releasable connection between the component and the base component. In a further advantage, by providing an abutment surface that abuts the elongated slot and thereby forms a rotational lock between the first fastening part and the component, no additional resources need to be spent to facilitate new mounting processes or tools.

Furthermore, the above described guiding surface allows for relatively easy placement of the first fastening part in the elongated slot as a person assembling the component to the base component using the described threaded fastening arrangement can place the first fastening part in a comparable way to a common first fastening part such as a bolt. The person assembly now only needs to apply an axial downward force, for example using commonly available plate to place the first fastening part in the elongated surface.

In a preferred embodiment, the pair of cooperating fastening parts are a bolt and a nut. More preferably, the first fastening part can be the bolt, wherein the bolt can comprise a shaft on which the abutment surface is provided. More specifically, the abutment surface can be provided on the shaft next to a bolt head of the bold. The guiding surface can then be provided on the opposite side of the abutment surface than the bolt head. An advantage of using a bolt and a nut is that they are commonly used and relatively cheap and reliably means for releasably connecting a component to a base component. The shaft of the bolt can comprise a thread comprising a coating, preferably glue or a friction conditioner, such that a relatively high friction between the bolt thread and the corresponding nut thread can be achieved. High friction bolt / nut thread connections can be used for bolt / nut connections that may endure significant vibrations. Non-high friction bolt / nut thread connections may unintentionally release.

The bolt can comprise at least two of abutment surfaces, preferably six abutment surfaces, provided evenly distributed around the shaft. A plurality of abutment surfaces may facilitate for even easier orientating of the bolt in the elongated slot. In a special embodiment, the plurality of provided abutment surfaces is an even number, forming pairs, wherein the pairs of abutment surfaces are provided substantially parallel to each other and on opposite sides of the shaft. This embodiment would, when the bolt is present in the elongated slot, allow for two abutment surfaces to abut to the surface of the elongated slot at the same time. This may provide for a stronger rotational lock between the bolt and the component.

Alternatively, the nut can comprise a tapered section on which the abutment surface is provided. In such an embodiment, the nut instead of the bolt would form a rotational lock with the component. As a result the bolt needs to be driven to form the releasable connection. This embodiment may be advantageous in case there is not sufficient space for providing a bolt in the slotted hole, but there is sufficient space for providing a nut in the slotted hole.
In addition, the invention further provides for a method of mounting a component to a base component according to independent claim 10.
The method has the benefit that no individual rotational positioning of the fastening parts is necessary since they are so called 'self positioning' and only need axial displacement that can easily be provided by a pressing tool that may provide axial pressing force on the fastening parts without needing to individually align and position the fastening parts.
Further advantageous aspects of the invention are set out in the description and appended claims.

The technical features described in the paragraphs and sentences above can be isolated from the context, and the isolated technical features from the different paragraphs and sentences can be combined. Such combinations are herewith specifically disclosed in this description.

The invention will further be elucidated on the basis of exemplary embodiments which are represented in the drawings. The exemplary embodiments are given by way of non-limitative illustration of the invention.

In the drawings:
Fig. 1A and 1B shows an isometric view of a first fastening part present in a component according to the invention;
Fig. 2 shows a side view of a first fastening mean according to an embodiment of the invention;
Fig. 3A shows a bottom view of the first fastening mean of Fig. 2;
Fig. 3B shows a front view of the component of Fig. 1;
Fig 4 shows an alternative embodiment wherein the fastening part is a nut.

It is noted that the figures are only schematic representations that are given by way of non-limited examples. In the figures, the same or corresponding parts are designated with the same reference numerals.

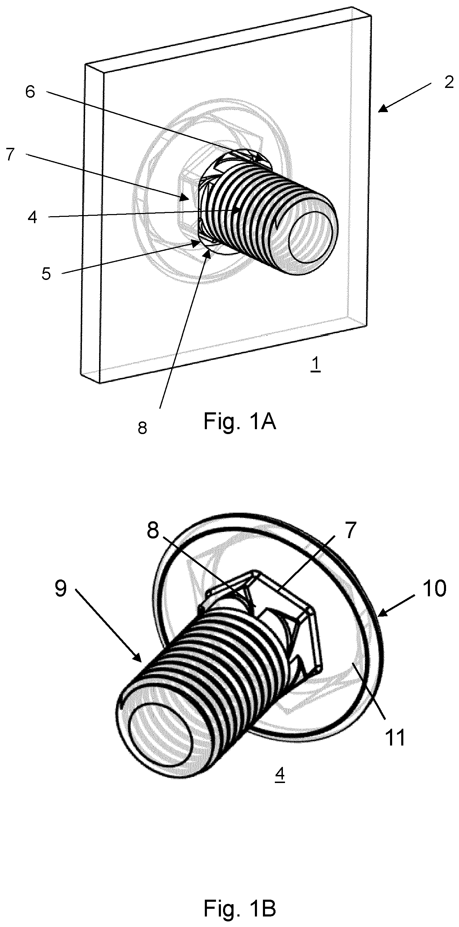

Turning to Fig. 1A, a threaded fastening arrangement 1 for mounting a component 2 to a base component (not shown) is depicted. The fastening arrangement 1 comprises a pair of cooperating fastening parts, of which only a first fastening part, in the form of bolt 4 is shown for clarity, and a component 2. The second part is a threaded nut (not shown) that cooperates with the threaded shaft of the bolt 4. The component 2 comprises a slotted hole 5 defined by a slotted hole surface 6. The first fastening part, in the shown example a bolt 4, comprises an abutment surface 7 arranged to substantially limit rotation of the first fastening part 4, e.g. the bolt, relative to the component 2 when the abutment surface 7 abuts the slotted hole surface 6. The slotted hole surface 6 or the first fastening part 4 comprises a guiding surface 8 shaped to center the first fastening part 4 in the slotted hole 5 such that the abutment surface 7 abuts the slotted hole surface 6, thereby causing the first fastening part 4 to become rotationally locked with the component 2.

Figure 1B shows the fastening part in more detail, notably a threaded shaft 9, abutment surface 7 and contact surface 11 of a flange 10 of the bolt 4. The bolt 4 further has guiding surface 8 contiguous to the abutment surface 7 and shaped to rotate the first fastening part 4 relative to the slotted hole 5 such that the abutment surface 7 abuts the slotted hole surface 6 thereby causing the first fastening part 4 to become rotationally locked with the component 2.

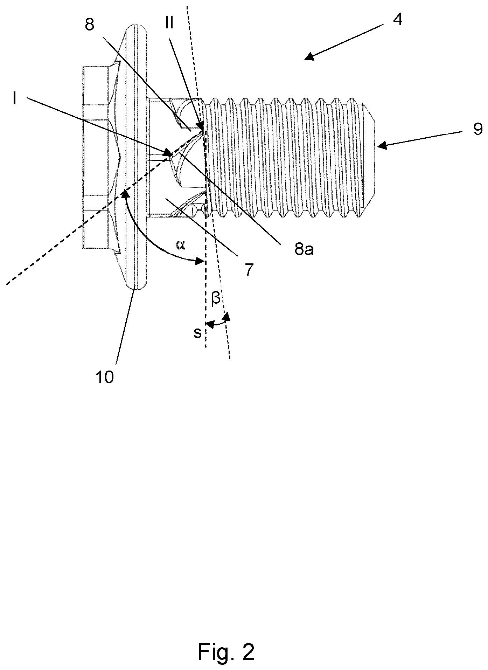

Turning to Fig. 2, the bolt 4, which acts as the first fastening part in the shown example, comprises a shaft 9 on which the abutment surface 7 is provided. In the shown embodiment, the bolt 3 comprises a plurality of abutment surfaces 7, more specific six abutment surfaces 7, provided evenly disturbed around the shaft 9. On the shaft 9 a thread is provided, which comprises a coating. More specifically, the coating is a friction conditioner or a glue. In the shown example, the guiding surface 8 has an edge or slope 8a that, when inserted in the slotted hole 5 is angled with an angle α respective to a normal plane s representing the slotted hole edge s, which is also the contact surface of the component 2, so that through axial displacement of the first fastening part 4 the first fastening part 4 is rotated relative to the slotted hole surface abutment surface until the abutment surface is parallel to the slotted hole surface. Slope 8a prevents the corners of the polygon P to get stuck on the edge of the slotted hole 5 in the plate and forces the bolt 4 into the slotted hole 5. The slope angle α may be such that the spinning direction of the nut through thread angle β will enforce an axial or "downhill" movement of the bolt into the slotted hole 5. The edge 8a runs to this end at least in part in tangential direction under an angle α relative to normal plane s and extends radially outwards of the abutment surface to the beginning of thread 10 to optimize a torque transfer between the edge and the slotted hole, in order to rotate the fastening part when pressed in axial direction. The angle α of the slope should be such that tan(α) is a factor 2 higher than the coefficient of friction between the edge of the slotted hole and the edge that forms the slope. This optimizes an optimal torque that results in rotation of the bolt 4, even with a substantial friction. The edge 8a may be curved to initiate the rotation of the bolt more easily.

It is shown that the slope of guiding surface 8 starts at the corner I of a polygon forming the abutment surfaces 7 and runs towards the start of the round part of the shaft of the bolt, point II in the figure.

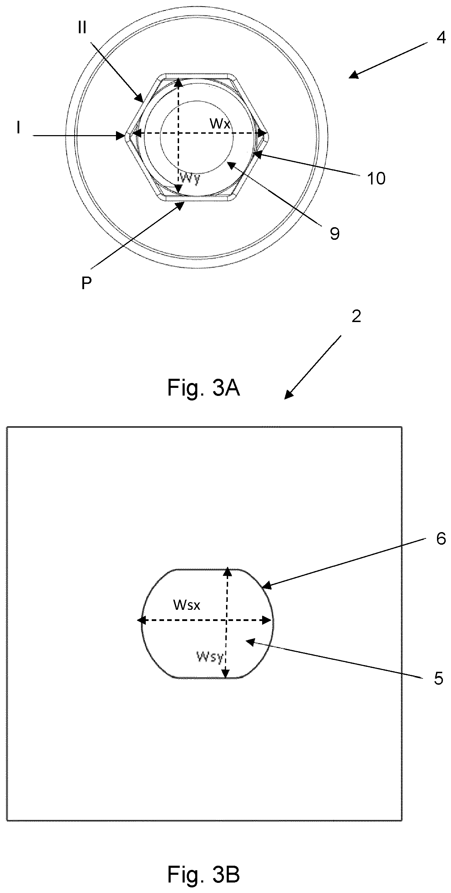

In Figure 3A the polygon dimension is shown where preferably opposite points of the polygon P are wider than the width of the straight part of the slotted hole and opposite ends of the slope (at the shaft), are less wide than the straight part of the slotted hole. The polygon P, when oriented right the polygon should fit in the slotted hole, but cannot fully rotate in the slotted shole shown in Figure 3B. In other words : in Wy < Wsy < Wx < Wsx. Figure 3B shows a preferred relative dimensioning of the slotted hole 5 relative to the fastening bolt 4.

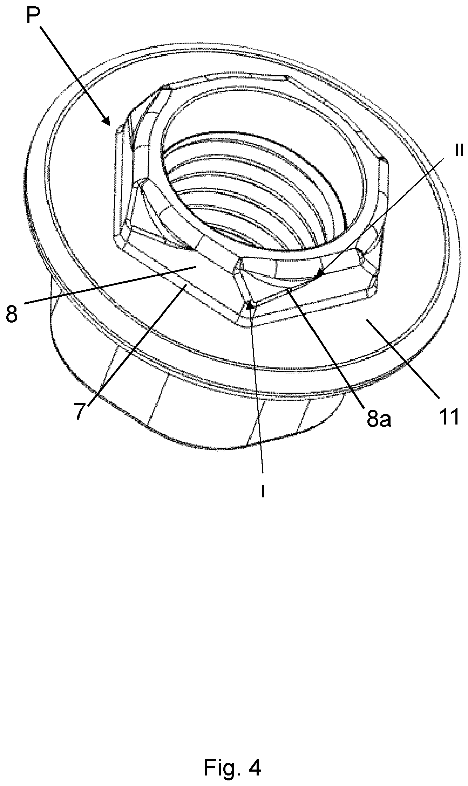

Fig 4 shows an alternative embodiment wherein the fastening part is a nut 3 with a contact surface 11, a guiding surface 8, an abutment surface 7 and a guiding edge 8a that preferably spirals between a corner (I) of abutment surface 7, in particular a corner of polygon P to an axial centerline (II) of the abutment surface 7. In the example guiding surface 8 comprises a tapered section with a radius slightly smaller than the smallest diameter of the slotted hole.
Variations are understood to be comprised within the scope of the invention as defined in the appended claims.

## Claims

1. Threaded fastening arrangement (1) for mounting a component to a base component,
- comprising a pair of cooperating fastening parts and a component (2);
- wherein the component (2) comprises a slotted hole (5) defined by a slotted hole surface (6);
- wherein a first fastening part (4) of the pair of cooperating fastening parts comprises an abutment surface (7) arranged to substantially limit rotation of the first fastening part (4) relative to the component (2) when the abutment surface (7) abuts the slotted hole surface (6);
- wherein the slotted hole (5) or the first fastening part (4) comprises a guiding surface (8) contiguous to the abutment surface (7) and shaped to rotate the first fastening part (4) relative to the slotted hole (5) such that the abutment surface (7) abuts the slotted hole surface (6) thereby causing the first fastening part (4) to become rotationally locked with the component (2); **characterized in that:**
- the guiding surface (8) has an edge (8a) that, when inserted in the slotted hole (5) is angled respective to the slotted hole surface (6), so that through axial displacement of the first fastening part (4) the first fastening part (4) is rotated relative to the slotted hole surface (6) abutment surface (7) until the abutment surface (7) is parallel to the slotted hole surface (6).

2. Threaded fastening arrangement (1) according to claim 1, wherein the fastening part comprises a plurality of abutment surfaces (7), preferably formed as a polygon.

3. Threaded fastening arrangement (1) according to any of the preceding claims, wherein the first fastening part (4) is a nut (3), wherein the nut (3) comprises a tapered section on which the abutment surface (7) is provided.

4. Threaded fastening arrangement (1) according to any preceding claim, wherein the first fastening part (4) is a bolt, wherein the bolt (4) comprises a shaft (9) on which the abutment surface (7) is provided.

5. Threaded fastening arrangement (1) according to claim 4, wherein the shaft (9) further comprises a thread comprising a coating, preferably glue or a friction conditioner.

6. Threaded fastening arrangement (1) according to claim 5, wherein the edge (8a) is angled in tangential direction relative to a normal plane.

7. Threaded fastening arrangement (1) according to any of the preceding claims, wherein the edge (8a) extends radially outwards of the abutment surface (7).

8. Threaded fastening arrangement (1) according to any of the preceding claims, wherein the edge (8a) has a slope angle that is directed in opposite direction of the thread angle, so that a reaction torque of a rotating second fastening part results in a rotation of the edge (8a).

9. Threaded fastening arrangement (1) according to any preceding claim, wherein the first fastening part (4) comprises a tapered section on which the abutment surface (7) is provided.

10. A method of mounting a component (2) to a base component by one or more pairs of fastening parts, wherein a first fastening part (4) of the one or more pairs of cooperating fastening parts comprises an abutment surface (7) arranged to substantially limit rotation of the first fastening part (4) relative to the component (2) when the abutment surface (7) abuts a slotted hole surface (6), **characterized in that** the slotted hole surface (6) or the first fastening part (4) comprises a guiding surface (8) contiguous to the abutment surface (7) and shaped to rotate the first fastening part (4) relative to the slotted hole (5) such that the abutment surface (7) abuts the slotted hole surface (6) thereby causing the first fastening part (4) to become rotationally locked with the component (2), wherein the guiding surface (8) has an edge (8a) that, when inserted in the slotted hole (5) is angled respective to the slotted hole surface (6), so that through axial displacement of the first fastening part (4) the first fastening part (4) is rotated relative to the slotted hole surface (6) abutment surface (7) until the abutment surface (7) is parallel to the slotted hole surface (6), the method comprising: exerting an axial force only to the first fastening part (4), and rotating the first fastening part (4) relative to the slotted hole (5) such that the abutment surface (7) abuts the slotted hole surface (6) thereby causing the first fastening part (4) to become rotationally locked with the component (2).

## Patentansprüche

1. Schraubverbindungsanordnung (1) zum Befestigen einer Komponente an einer Basiskomponente,
- umfassend ein Paar von zusammenwirkenden Verbindungsteilen und eine Komponente (2);
- wobei die Komponente (2) ein Langloch (5) umfasst, das durch eine Langlochfläche (6) definiert ist;
- wobei ein erstes Verbindungsteil (4) des Paares von zusammenwirkenden Verbindungsteilen eine Anschlagfläche (7) umfasst, die angeordnet ist, um im Wesentlichen die Rotation des ersten Verbindungsteils (4) relativ zu der Komponente (2) zu begrenzen, wenn die Anlagefläche (7) an der Langlochfläche (6) anliegt;
- wobei das Langloch (5) oder das erste Verbindungsteil (4) eine Führungsfläche (8) umfasst, die an die Anschlagfläche (7) angrenzt und geformt ist, um das erste Verbindungsteil (4) relativ zu dem Langloch (5) so zu drehen, dass die Anlagefläche (7) an die Langlochfläche (6) anliegt, wodurch bewirkt wird, dass das erste Verbindungsteil (4) drehschlüssig mit der Komponente (2) verbunden wird; **dadurch gekennzeichnet, dass**:
- die Führungsfläche (8) eine Kante (8a) aufweist, die beim Einsetzen in das Langloch (5) in Bezug auf die Langlochfläche (6) abgewinkelt ist, sodass durch axiale Verschiebung des ersten Verbindungsteils (4) das erste Verbindungsteil (4) relativ zu der Anlagefläche (7) der Langlochfläche (6) gedreht wird, bis die Anlagefläche (7) parallel zu der Langlochfläche (6) ist.

2. Schraubverbindungsanordnung (1) nach Anspruch 1, wobei das Verbindungsteil eine Vielzahl von Anlageflächen (7) umfasst, die vorzugsweise als ein Polygon gebildet sind.

3. Schraubverbindungsanordnung (1) nach einem der vorstehenden Ansprüche, wobei das erste Verbindungsteil (4) eine Mutter (3) ist, wobei die Mutter (3) einen konischen Abschnitt umfasst, an dem die Anlagefläche (7) bereitgestellt ist.

4. Schraubverbindungsanordnung (1) nach einem der vorstehenden Ansprüche, wobei das erste Verbindungsteil (4) ein Bolzen ist, wobei der Bolzen (4) einen Schaft (9) umfasst, an dem die Anlagefläche (7) bereitgestellt ist.

5. Schraubverbindungsanordnung (1) nach Anspruch 4, wobei der Schaft (9) ferner ein Gewinde umfasst, das eine Beschichtung, vorzugsweise einen Klebstoff oder einen Reibungskonditionierer, umfasst.

6. Schraubverbindungsanordnung (1) nach Anspruch 5, wobei die Kante (8a) in tangentialer Richtung relativ zu einer Normalebene abgewinkelt ist.

7. Schraubverbindungsanordnung (1) nach einem der vorstehenden Ansprüche, wobei sich die Kante (8a) von der Anlagefläche (7) radial nach außen erstreckt.

8. Schraubverbindungsanordnung (1) nach einem der vorstehenden Ansprüche, wobei die Kante (8a) einen Steigungswinkel aufweist, der in entgegengesetzter Richtung des Gewindewinkels gerichtet ist, sodass ein Reaktionsmoment eines rotierenden zweiten Verbindungsteils zu einer Rotation der Kante (8a) führt.

9. Schraubverbindungsanordnung (1) nach einem der vorstehenden Ansprüche, wobei das erste Verbindungsteil (4) einen sich verjüngenden Abschnitt umfasst, an dem die Anlagefläche (7) bereitgestellt ist.

10. Verfahren zum Befestigen einer Komponente (2) an einer Basiskomponente durch ein oder mehrere Paare von Verbindungsteilen, wobei ein erstes Verbindungsteil (4) des einen oder der mehreren Paare von zusammenwirkenden Verbindungsteilen eine Anlagefläche (7) umfasst, die angeordnet ist, um im Wesentlichen eine Rotation des ersten Verbindungsteils (4) relativ zu der Komponente (2) zu begrenzen, wenn die Anlagefläche (7) an einer Langlochfläche (6) anliegt, **dadurch gekennzeichnet, dass** die Langlochfläche (6) oder das erste Verbindungsteil (4) eine Führungsfläche (8) umfasst, die an die Anschlagfläche (7) angrenzt und geformt ist, um das erste Verbindungsteil (4) relativ zu dem Langloch (5) so zu drehen, dass die Anlagefläche (7) an die Langlochfläche (6) anliegt, wodurch bewirkt wird, dass das erste Verbindungsteil (4) drehschlüssig mit der Komponente (2) verbunden wird, wobei die Führungsfläche (8) eine Kante (8a) aufweist, die beim Einsetzen in das Langloch (5) in Bezug auf die Langlochfläche (6) abgewinkelt ist, sodass durch axiale Verschiebung des ersten Verbindungsteils (4) das erste Verbindungsteil (4) relativ zu der Anlagefläche (7) der Langlochfläche (6) gedreht wird, bis die Anlagefläche (7) parallel zu der Langlochfläche (6) ist, wobei das Verfahren Folgendes umfasst: Ausüben einer axialen Kraft nur auf das erste Verbindungsteil (4), und Drehen des ersten Verbindungsteils (4) relativ zu dem Langloch (5), sodass die Anlagefläche (7) an der Langlochfläche (6) anliegt, wodurch bewirkt wird, dass das erste Verbindungsteil (4) drehschlüssig mit der Komponente (2) verbunden wird.

## Revendications

1. Agencement de fixation fileté (1) pour monter un composant sur un composant de base,
comprenant une paire de parties de fixation coopérant et un composant (2) ;
dans lequel le composant (2) comprend un trou oblong (5) défini par une surface de trou oblong (6) ;
dans lequel une première partie de fixation (4) de la paire de parties de fixation coopérant comprend une surface de butée (7) agencée pour limiter sensiblement la rotation de la première partie de fixation (4) relativement au composant (2) quand la surface de butée (7) vient en butée sur la surface de trou oblong (6) ;
dans lequel le trou oblong (5) ou la première partie de fixation (4) comprend une surface de guidage (8) contiguë à la surface de butée (7) et formée pour faire tourner la première partie de fixation (4) relativement au trou oblong (5) de telle manière que la surface de butée (7) vient en butée sur la surface de trou oblong (6) rendant ainsi la première partie de fixation (4) bloquée en rotation avec le composant (2) ; **caractérisé en ce que** :
la surface de guidage (8) comporte un bord (8a) qui, quand il est inséré dans le trou oblong (5) est incliné par rapport à la surface de trou oblong (6), de telle manière que par un déplacement axial de la première partie de fixation (4) la première partie de fixation (4) est tournée relativement à la surface de butée (7) de la surface de trou oblong (6) jusqu'à ce que surface de butée (7) soit parallèle à la surface de trou oblong (6).

2. Agencement de fixation fileté (1) selon la revendication 1, dans lequel la partie de fixation comprend une pluralité de surfaces de butée (7), de préférence formées comme un polygone.

3. Agencement de fixation fileté (1) selon l'une quelconque des revendications précédentes, dans lequel la première partie de fixation (4) est un écrou (3), dans lequel l'écrou (3) comprend une section conique sur laquelle la surface de butée (7) est placée.

4. Agencement de fixation fileté (1) selon l'une quelconque des revendications précédentes, dans lequel la première partie de fixation (4) est un boulon, dans lequel le boulon (4) comprend un axe (9) sur lequel la surface de butée (7) est fournie.

5. Agencement de fixation fileté (1) selon la revendication 4, dans lequel l'axe (9) comprend en outre un filetage comprenant un revêtement, de préférence de la colle ou un favorisateur de frottement.

6. Agencement de fixation fileté (1) selon la revendication 5, dans lequel le bord (8a) est incliné dans une direction tangentielle relativement à un plan normal.

7. Agencement de fixation fileté (1) selon l'une quelconque des revendications précédentes, dans lequel le bord (8a) s'étend radialement vers l'extérieur de la surface de butée (7).

8. Agencement de fixation fileté (1) selon l'une quelconque des revendications précédentes, dans lequel le bord (8a) a un angle d'inclinaison qui est dirigé dans une direction opposée de l'angle de filetage, de telle manière qu'un couple de réaction d'une seconde partie de fixation tournante provoque une rotation du bord (8a).

9. Agencement de fixation fileté (1) selon l'une quelconque des revendications précédentes, dans lequel la première partie de fixation (4) comprend une section conique sur laquelle la surface de butée (7) est placée.

10. Procédé de montage d'un composant (2) sur un composant de base par une ou plusieurs paires de parties de fixation, dans lequel une première partie de fixation (4) des une ou plusieurs paires de parties de fixation coopérant comprend une surface de butée (7) agencée pour limiter sensiblement la rotation de la première partie de fixation (4) relativement au composant (2) quand la surface de butée (7) vient en butée sur une surface de trou oblong (6), **caractérisé en ce que** la surface de trou oblong (6) ou la première partie de fixation (4) comprend une surface de guidage (8) contiguë à la surface de butée (7) et formée pour faire tourner la première partie de fixation (4) relativement au trou oblong (5) de telle manière que la surface de butée (7) vient en butée sur la surface de trou oblong (6) rendant ainsi la première partie de fixation (4) bloquée en rotation avec le composant (2), dans lequel la surface de guidage (8) comporte un bord (8a) qui, quand il est inséré dans le trou oblong (5) est incliné par rapport à la surface de trou oblong (6), de telle manière que par un déplacement axial de la première partie de fixation (4) la première partie de fixation (4) est tournée relativement à la surface de butée (7) de la surface de trou oblong (6) jusqu'à ce que surface de butée (7) soit parallèle à la surface de trou oblong (6), le procédé comprenant : d'exercer une force axiale seulement sur la première partie de fixation (4), et de faire tourner la première partie de fixation (4) relativement au trou oblong (5) de telle manière que la surface de butée (7) vient en butée sur la surface de trou oblong (6) rendant ainsi la première partie de fixation (4) bloquée en rotation avec le composant (2).
